# EUROPEAN PATENT APPLICATION

(11) **EP 4 644 748 A1**
(43) Date of publication of application: **05.11.2025**
(21) Application number: 23910793.1
(22) Date of filing: 28.12.2023
(51) Int. Cl.: F16K 31/54, F16K 31/04

(54) **DRIVING DEVICE AND WATER VALVE**

(30) Priority: 31.12.2022 CN 202211739546
(71) Applicant: Zhejiang Sanhua Intelligent Controls Co.,Ltd, Shaoxing, Zhejiang 312530 (CN)
(72) Inventor: PENG, Chao, Shaoxing, Zhejiang 312530 (CN)
(74) Representative: Epping - Hermann - Fischer
(86) International application number: PCT/CN2023/142596
(87) International publication number: WO 2024/140876

(57) **Abstract**

A driving device and a water valve using the driving device, the driving device comprising a lower housing (302) and an elastic piece (310). The lower housing (302) is provided with an elastic piece restraining portion (3029), and the elastic piece restraining portion (3029) is provided with an elastic piece supporting portion (30291) and an elastic piece positioning portion (30292). The elastic piece (310) comprises an elastic piece fixing portion (3103), the elastic piece fixing portion (3103) being fixedly connected to the elastic piece positioning portion (30292). The elastic piece supporting portion (30291) is provided with at least part of a plane portion, and the elastic piece (310) can abut against the elastic piece supporting portion (30291). The structure can accurately position and support the elastic piece.

## Description

The present application claims the priority of the Chinese Patent Application No. 202211739546.X, titled "DRIVING DEVICE AND WATER VALVE", filed on December 31, 2022 with the China National Intellectual Property Administration, which is incorporated herein by reference in its entirety.

### FIELD

The present application relates to the technical field of motor driving devices and valves, and in particular to a driving device and a water valve of the driving device.

### BACKGROUND

A water valve is a control part of fluid transportation, which is mainly used to alter the flow direction of medium. The water valve includes a driving device, a connecting seat and a valve body. In a specific background, the driving device includes an upper housing, a motor, a driven cam, a driving cam, an elastic sheet, a swing arm portion, a lower housing and other components. When the motor is energized, an output shaft of the motor generates rotating torque to drive the driving cam to rotate. The driving cam can push the elastic sheet to deform and change the contact state between contacts of the elastic sheet. The elastic sheet is made of thin metal sheet. Therefore, the problem to be solved by the skilled in the art is how to fix and position the elastic sheet effectively to ensure the mounting accuracy of the elastic sheet.

### SUMMARY

An object of the present application is to provide a driving device for improving mounting accuracy of an elastic sheet. Therefore, the following technical solutions are provided according to an embodiment of the present application.

A driving device includes a lower housing and an elastic sheet. The lower housing is provided with an elastic sheet restraining portion. The elastic sheet restraining portion includes an elastic sheet supporting portion and an elastic sheet positioning portion. The elastic sheet includes an elastic sheet fixing portion, which is fixedly connected to the elastic sheet positioning portion. The elastic sheet supporting portion is provided with at least partial plane portion, and the elastic sheet abuts against the elastic sheet supporting portion.

A water valve is further provided according to an embodiment of the present application adopting the driving device described above.

In the driving device provided by the above embodiment, the elastic sheet restraining portion is provided with the elastic sheet supporting portion and the elastic sheet positioning portion. The elastic sheet fixing portion is fixedly connected to the elastic sheet positioning portion. The elastic sheet supporting portion is provided with at least partial plane portion, and the elastic sheet abuts against the elastic sheet supporting portion. Compared to the conventional technology, the elastic sheet may be accurately positioned and supported.

### BRIEF DESCRIPTION OF THE DRAWINGS

FIG. 1 is a schematic structural view showing a working state of a water valve structure provided according to an embodiment of the present application;
FIG. 2 is a schematic structural view showing another working state of the water valve structure provided according an embodiment of the present application;
FIG. 3 is a structural exploded view of a driving device provided according to an embodiment of the present application;
FIG. 4 is a partial cross-section view showing a fixing plate abutting against a first cam portion according to an embodiment of the present application;
FIG. 5 is a schematic structural view of a first cam portion provided according to an embodiment of the present application;
FIG. 6 is a schematic structural view of a second cam portion provided according to an embodiment of the present application;
FIG. 7 is a schematic view showing a first state of a first cam portion fitting with a second cam portion provided according an embodiment of the present application;
FIG. 8 is a schematic view showing a second state of a first cam portion fitting with a second cam portion provided according an embodiment of the present application;
FIG. 9 is a partial view showing a working state of a driving device provided according an embodiment of the present application;
FIG. 10 is a partial view showing another working state of a driving device provided according an embodiment of the present application;
FIG. 11 is a schematic structural view of a lower housing provided according an embodiment of the present application;
FIG. 12 is a schematic structural view of an elastic sheet provided according an embodiment of the present application;
FIG. 13 is an enlarged view of part I shown in FIG. 9.

### DETAILED DESCRIPTION OF THE EMBODIMENTS

In order to enable those skilled in the art to better understand the technical solutions provided by the present application, the technical solutions of the present application will be further described in detail below with reference to the accompanying drawings and specific embodiments. It should be noted that the core concept of a water valve provided according to the present application lies in the structure of the driving device. As for other components, such as a connecting seat, a valve body and a flow channel structure inside the valve body and the like, they can be adjusted adaptively based on requirements of different application scenarios of the system. It should be noted that the present application only describes the working mechanism of the water valve in a specific embodiment, and does not limit that the above-mentioned driving device can only be applied to the water valve with this structure.

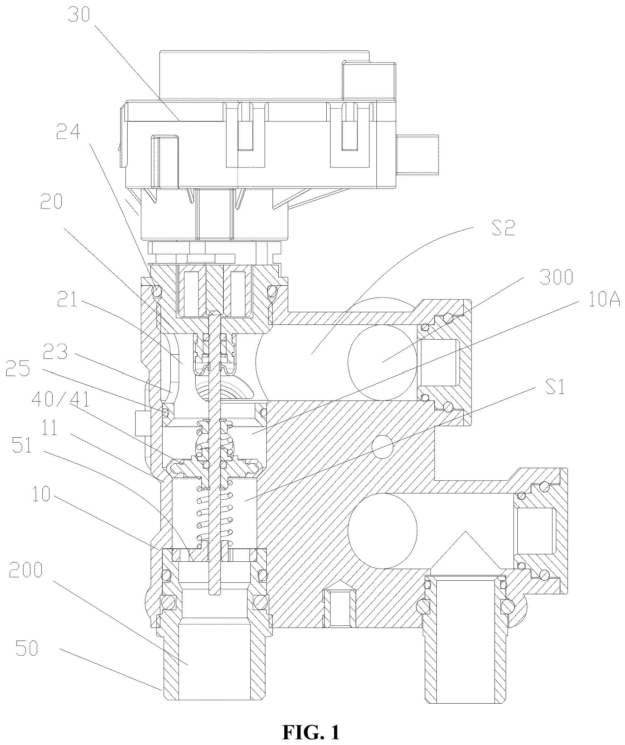

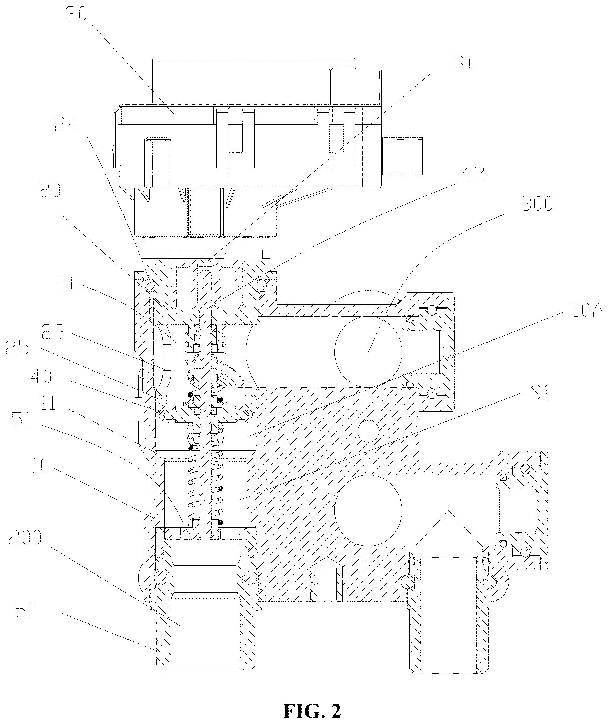

With reference to FIGS. 1 and 2, FIG. 1 is a schematic structural view showing a working state of a water valve structure provided according to an embodiment of the present application, and FIG. 2 is a schematic structural view showing another working state of the water valve structure provided according an embodiment of the present application. The water valve is provided with an inlet channel, a first outflow channel 200, and a second outflow channel 300. The water valve includes a valve body 10, a connecting seat 20, a driving device 30, a core assembly 40, a fixing seat 50, and a connecting plate 51, and the connecting seat 20 is fixedly connected to the valve body 10. In this embodiment, the connecting seat 20 and the valve body 10 may be fixed by threaded connection, and an upper sealing member 24 is provided between the connecting seat 20 and the valve body 10 to further improve the effect of the sealed connection. The connecting seat 20 and the valve body 10 are also sealed through a lower sealing member 25, preventing the medium from flowing out. The connecting seat 20 is provided with a connecting seat cavity 21, and a side wall of the connecting seat 20 is provided with a connecting hole 23, which runs through the side wall of the connecting seat 20. The driving device 30 is located above the connecting seat 20 and includes a driving shaft 31, which can abut against a valve rod 42 of the core assembly 40 to displace the core assembly 40 as a whole along an axial direction of the connecting seat 20.

The valve body 10 includes an abutting portion 11. The abutting portion 11 and the valve body 10 may be integrally formed by lathe machining or the like into an integrated structure. The abutting portion 11 provided by the embodiment of the present application may be a conical step portion or have other irregular-shaped structure, as long as it may play a support role with a valve core member 41 of the core assembly 40, and the specific shape of the abutting portion 11 will not be limited herein. The water valve is provided with an accommodating cavity 10A, which is defined by the lower sealing portion, the abutting portion 11, and an inner peripheral wall of part of the valve body 10 located between the lower sealing portion and the abutting portion 11. The valve core member 41 may be displaced along an axis of the connecting seat 20 in the accommodating cavity 10A, and the valve core member 41 may be abutted against the lower sealing portion of the connecting seat 20 or the valve core member 41 may be abutted against the abutting portion 11. When the valve core member 41 moves axially upward and abuts against the lower sealing portion of the connecting seat, an upper sealing mating sub-structure of the water valve is formed, at which time the medium enters the accommodating cavity 10A from the inlet channel and flows to the first outflow channel 200 through an opening where the abutting portion 11 is located. When the valve core member 41 moves axially downward and abuts against the abutting portion 11 of the valve body 10, a lower sealing mating sub-structure of the water valve is formed, at which time the medium enters the accommodating cavity 10A from the inlet channel and flows to the second outflow channel 300 from the opening where the lower sealing portion is located.

The water valve further includes a first overflow channel S1 and a second overflow channel S2, and the accommodating cavity 10A can communicate with the first outflow channel 200 through the first overflow channel S1 and communicate with the second outflow channel 300 through the second overflow channel S2. The fixing seat 50 is fixedly connected and sealingly fitted with the valve body 10, and the connecting plate 51 is fixedly connected to the fixing seat 50. The connecting plate 51 is provided with multiple flow holes to communicate the first overflow channel S1 and the first outflow channel 200. The inner peripheral wall of part of the valve body 10 located between the abutting portion 11 and the connecting plate 51 roughly forms the cavity wall of the first overflow channel S1, and the inner peripheral wall of the fixing seat 50 roughly forms the cavity wall of the first outflow channel 200. When the valve core member 41 abuts against the lower sealing portion of the connecting seat 20, the accommodating cavity 10A, the first overflow channel S1 and the first outflow channel 200 are communicated with each other. The inner peripheral wall of another part of the valve body 10 located between the connecting seat 20 and the opening of the second outflow channel 300 roughly forms the cavity wall of the second overflow channel S2. When the valve core member 41 abuts against the abutting portion 11, the accommodating cavity 10A, the connecting seat cavity 21, the second overflow channel S2 and the second outflow channel 300 are communicated with each other.

Under the excitation of the driving device 30, the driving shaft 31 presses against the valve rod 42 to move axially downwards, enabling the valve core member 41 to move axially downwards until it abuts against the abutting portion 11. When the driving shaft 31 is lifted up axially, the entire valve core member 41 is lifted up until the valve core member 41 abuts against the lower sealing portion of the connecting seat 20. In order to achieve a better sealing effect, the lower sealing portion may be in a conical structure, and the abutting portion 11 may be in a conical structure.

Next, the driving device 30 will be described in detail with reference to the drawings.

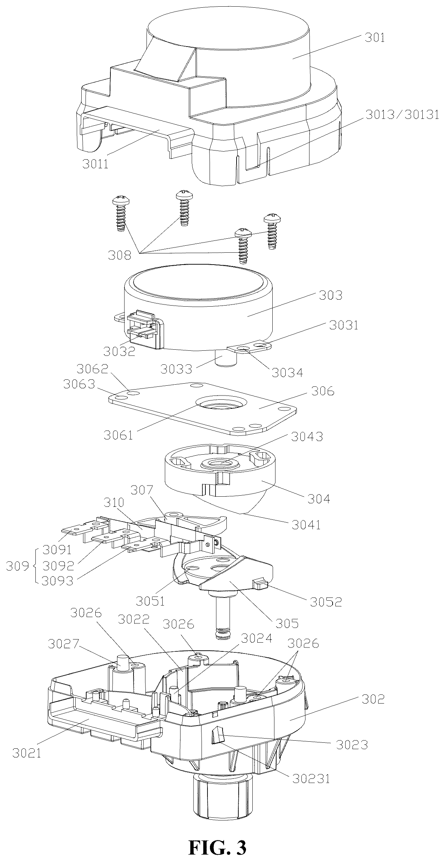

With reference to FIG. 3, FIG. 3 is a structural exploded view of a driving device provided according to an embodiment of the present application. The driving device 30 includes an upper housing 301 and a lower housing 302, which are fixed to each other to form a cavity. In order to further enable the upper housing 301 and the lower housing 302 to fit closely with each other, multiple first buckle portions 3013 may be arranged on an outer edge of the upper housing 301, and a corresponding number of second buckle portions 3023 may be arranged on an outer edge of the lower housing 302. Specifically, the first buckle portion 3013 is provided with a buckle hole portion 30131, and the second buckle portion 3023 is provided with a buckle step portion 30231. During assembly, the first housing 301 is moved downward along an axial direction shown in FIG. 3, enabling the first buckle portion 3013 moves toward the second buckle portion 3023. During the movement, the first buckle portion 3013 may abut against an inclined surface of the buckle step portion 30231, thus causing certain deformation in a radial direction. When the buckle step portion 30231 is in place, the buckle step portion 30231 will be engaged with the buckle hole portion 30133, thus achieving a limited connection and fixed engagement therebetween. Also, the skilled in the art, under the above enlightenment, may also dispose the first buckle portion on the lower housing 302 and the second buckle portion on the upper housing 301, and the same technical effect can be achieved. The driving device 30 further includes a terminal portion 3021, from which an insert described below extends. In this embodiment, the terminal portion 3021 is formed by locking a first protruding portion 3011 integrally formed with the upper housing 301 and a second protruding portion 3021 integrally formed with the lower housing 302.

In a space surrounded by the upper housing 301 and the lower housing 302, a motor 303, a fixing plate 306, a first cam portion 304 and a second cam portion 305 are provided. The motor 303 drives the first cam portion 304 to rotate, and the cam mechanism between the first cam portion 304 and the second cam portion 305 enables the second cam portion 305 to move in the axial direction. The second cam portion 305 is provided with a limiting hole portion 3051 and a limiting step portion 3052, and the limiting step portion 3052 may be integrally formed with the second cam portion 305 by injection molding. The lower housing 302 is provided with a limiting groove portion 3022 and a first limiting column portion 3024, which may be integrally formed with the lower housing 302 by injection molding. The limiting groove portion 3022 has a certain height along the axial direction (a vertical direction as shown in FIG. 3) of the lower housing 302. During mounting, the second cam portion 305 is loaded from above, so that the limiting step portion 3052 of the second cam portion 305 fits with the limiting groove portion 3022 and can slide up and down along the limiting groove portion 3022. At the same time, the first limiting column portion 3024 is inserted into the limiting hole portion 3051, in which case the second cam portion 305 is not rotable in the circumferential direction, and is only displaceable in the vertical direction relative to the lower housing 302. This fitting structure may also enable the second cam portion 305 and the lower housing 302 to have better coaxiality.

The first cam portion 304 cooperates with the motor output shaft 3033 of the motor 303 and is rotable with the motor output shaft 3033. Specifically, the middle of the first cam portion 304 is provided with a irregular-shaped hole portion 3043, which is adapted to the cross-sectional shape of the motor output shaft 3033, in which case the first cam portion 304 may rotate with the rotation of the motor output shaft 3033. A fixing plate 306 is further provided between the first cam portion 304 and the motor 303. The fixing plate 306 is generally plate-shaped and is integrally formed of a metal material. The fixing plate 306 has a through hole portion 3061, which may be made by stamping, forms a flanging form relative to the fixing plate body, and forms a fixing plate pressing portion 30611 for abutting against the first cam portion 304. The through hole portion 3061 forms a through hole, and the motor output shaft 3033 passes through the through hole and is connected with the first cam portion 304 in a limited way. As a specific embodiment, the first cam portion 304 may further be provided with a cam pressing portion 3047, which protrudes in the axial direction and is used for abutting against the fixing plate pressing portion 30611. In this structure, the fixing plate pressing portion 30611 abuts against the cam pressing portion 3047, which is beneficial to preventing the first cam portion 304 from abutting against the fixing plate 306 due to the reaction force and reduce the noise.

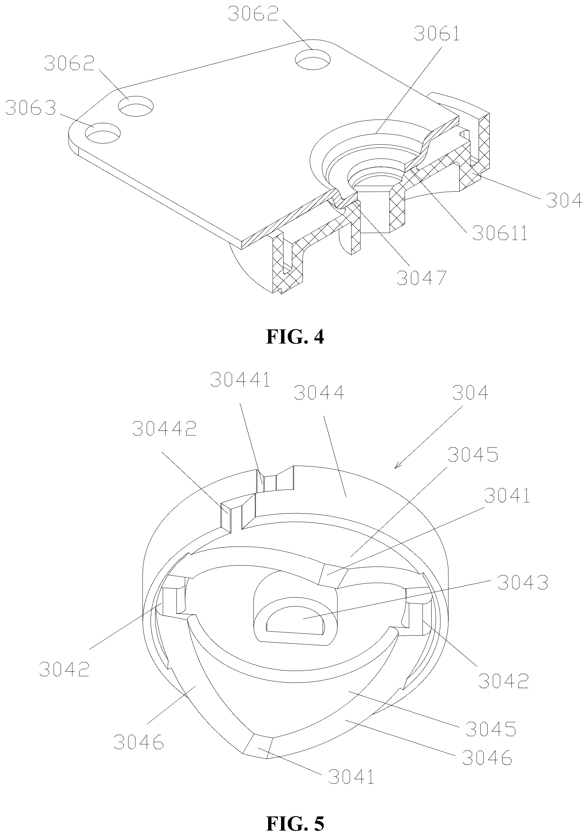

With reference to FIG. 4, FIG. 4 is a partial cross-section view showing a fixing plate abutting against a first cam portion according to an embodiment of the present application. The fixing plate 306 is provided with a first mounting hole portion 3062, and correspondingly, the lower housing 302 is provided with a second mounting hole portion 3026. In this embodiment, four first mounting hole portions 3062 and the second mounting hole portion 3026s are provided. Of course, those skilled in the art can understand that the number of the mounting hole portion can be set as required, and there is no need to limit the number. The fixing plate 306 is further provided with a limiting hole portion 3063, and correspondingly, the lower housing 302 is provided with a second limiting column portion 3027, which can also be injection-molded into an integrated structure with the lower housing 302. During assembly, the limiting hole portion 3063 of the fixing plate 306 is fitted with the second limiting column portion 3027 to realize fitting and limiting, and then the screw 308 is screwed into the first mounting hole portion 3062 and the second mounting hole portion 3026 for fixed connection, so that the fixing plate pressing portion 30611 of the fixing plate 306 abuts against the cam pressing portion 3047. The fitting between the second limiting column portion 3027 and the limiting hole portion 3063 is beneficial to ensuring the relative position between the fixing plate 306 and the lower housing 302 and improve the assembly accuracy.

As a derivative embodiment, the motor 303 may also be fixed together with the fixing plate 306 and the lower housing 302. The outer edge of the motor 303 is provided with multiple motor fixing hole portions 3031 and motor limiting hole portions 3034. In this embodiment, the motor fixing hole portions 3031 and the motor limiting hole portions 3034 are both arranged at the outer edge of the motor. Of course, it is not limited to a hole shape, other shapes such as an open groove shape may also achieve the purpose of positioning and fixing. The motor fixing hole portion 3031 is arranged corresponding to a part of the second mounting hole portion 3026 of the lower housing 302 after assembly, and the motor limiting hole portion 3034 is arranged corresponding to the second limiting column portion 3027 of the lower housing 302. In this way, by tightening the screw 308 and passing it through the motor 303, the first mounting hole portion 3062 of the fixing plate 306, and the second mounting hole portion 3026 of the lower housing 302 sequentially, the motor 303, the fixing plate 306, and the lower housing 302 may be fixedly connected together. This assembly method eliminates the need for separate design of fixation for the motor 303, as it achieves precise relative positioning of both the motor 303 and the fixing plate 306 simultaneously through the arrangement of the second limiting column portion 3027.

In the above embodiment, the fixing plate 306 is fixedly connected with the lower housing 302, and the first cam portion 304 and the second cam portion 305 are restricted between the fixing plate 306 and the lower housing 302. The reaction force generated by the second cam portion 305 during operation is applied to the fixing plate 306 through the first cam portion 304. Since the fixing plate 306 is fixedly connected to the lower housing 302, this reaction force is then transmitted to the lower housing 302, forming a thermodynamic balance. Compared to the technical solution in the background, there are fewer stress-bearing components, which is beneficial to improving the stroke accuracy of the second cam portion 305. Moreover, in this technical solution, the reaction force is basically not transmitted to the motor 303 and the upper housing 301. Therefore, the strength requirement for the upper housing 301 is relatively low, allowing for further reduction of the production cost of the upper housing 301.

With reference to FIG. 5, FIG. 5 is a schematic structural view of a first cam portion provided according to and embodiment of the present application. The first cam portion 304 includes a first body portion 3044 and a first annular portion 3045. The first body portion 3044 is generally plate-shaped, and the first annular portion 3045 is provided at the outer edge of one side of the first body portion 3044 and extends in the axial direction from the first body portion 3044. The first annular portion 3045 is formed with a first convex portion 3041, which is relatively further away from the first body portion 3044. With reference to the direction shown in FIG. 5, the first convex portion 3041 is located at the bottom of the first cam portion 304. The first cam portion 304 further includes a first concave portion 3042 which is relatively closer to the first body portion 3044. The first annular portion 3045 may be a complete annular structure or a part of the complete annular structure in the circumferential direction, and the first concave portion 3042 may be a concave portion of an integral first annular portion 3045 or a notch portion formed between two first annular portions 3045. A first transition portion 3046 is formed between the first convex portion 3041 and the first concave portion 3042, and a height of the first transition portion 3046 gradually decreases along a direction from the first convex portion 3041 to the first concave portion 3042. In this embodiment, as shown in FIG. 5, there are two first annular portions 3045, and the notch portion formed between two adjacent first annular portions 3045 is the first concave portion 3042. In this embodiment, two first convex portions 3041 and two first concave portions 3042 are provided, and correspondingly, the number of the first transition portions 3046 is four. When the first cam portion 304 is engaged with the second cam portion 305, with the rotation of the first cam portion 304, the first cam portion 304 will move along an engaging portion of the second cam portion 305 with the first convex portion 3041. The outer edge of the first body portion 3044 is provided with a first engaging groove 30441 and a second engaging groove 30442. Along the height direction of the first cam portion 304, the first engaging groove 30441 and the second engaging groove 30442 have different positions in the axial direction, that is, the first engaging groove 30441 is closer to the top of the first cam portion 304 and the second engaging groove 30442 is farther away from the first cam portion 304. The first engaging groove 30441 and the second engaging groove 30442 are used to cooperate with a swing arm assembly described below.

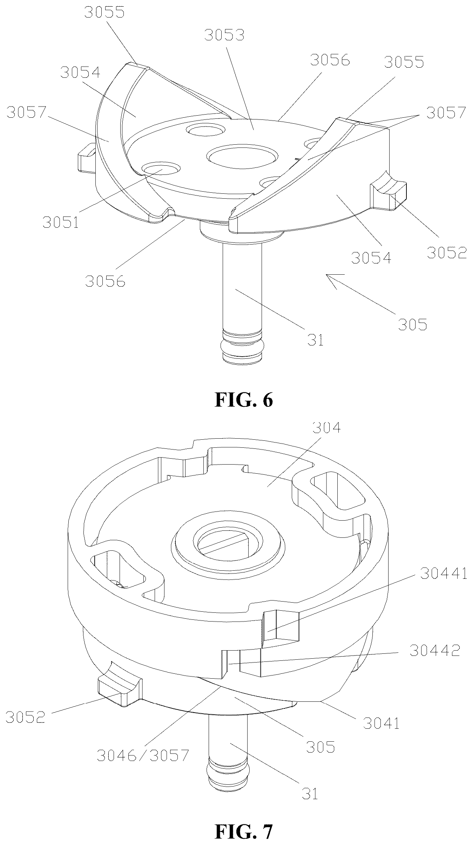

With reference to FIG. 6, FIG. 6 is a schematic structural view of a second cam portion provided according to an embodiment of the present application. The second cam portion 305 includes a second body portion 3053 and a second annular portion 3054. The second annular portion 3054 may be a complete annular structure or a part of the complete annular structure in the circumferential direction. The second body portion 3053 is generally plate-shaped, and the second annular portion 3054 is provided at the outer edge of one side of the second body portion 3053 and extends from the second body portion 3053 in the axial direction. Along the assembly direction of the first cam portion 304 and the second cam portion 305, the extension direction of the second annular portion 3054 is opposite to that of the first annular portion 3045, that is, they extend in opposite directions. The second annular portion 3054 is formed with a second convex portion 3055, which is relatively further away from the second body portion 3053. With reference to the direction shown in FIG. 6, the second convex portion 3055 is located at the top of the second cam portion 305. The second cam portion 305 further includes a second concave portion 3056 which is relatively closer to the second body portion 3053. The second concave portion 3056 may be either a concave portion of an integral second annular portion or a notched portion formed between two second annular portions 3054. A second transition portion 3057 is formed between the second convex portion 3055 and the second concave portion 3056, and the height of the second transition portion 3057 gradually decreases along the direction from the second convex portion 3055 to the second concave portion 3056. The contour shape of the second transition portion 3057 matches the contour shape of the first transition portion 3046. In this embodiment, as shown in FIG. 6, there are two second annular portions 3054, and the notch portion formed between two adjacent second annular portions 3054 is the second concave portion 3056. In this embodiment, two second convex portions 3055 and two second concave portions 3056 are provided, and accordingly, the number of the second transition portions 3057 is four. The second cam portion 305 includes a driving shaft 31. As shown in FIG. 1, the driving shaft 31 may abut against the valve rod 42 of the core assembly 40, so that the core assembly 40 as a whole can be displaced along the axial direction of the connecting seat 20.

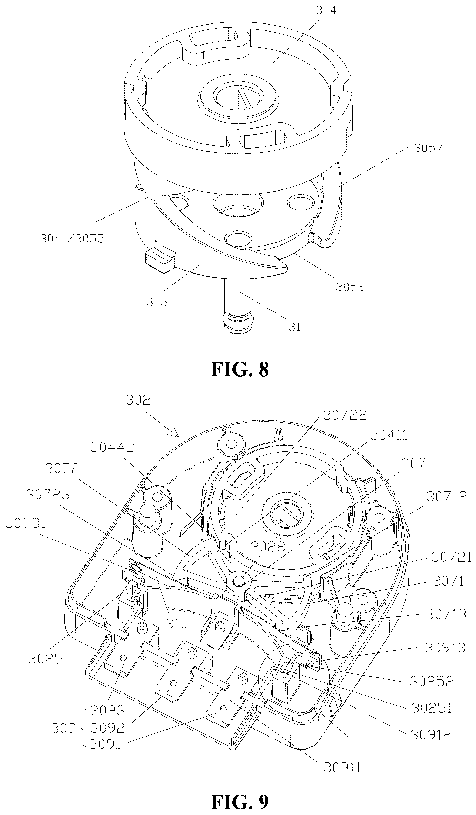

With reference to FIG. 7 and FIG. 8, FIG. 7 is a schematic view showing a first state of a first cam portion 304 fitting with a second cam portion 305 provided according an embodiment of the present application, and FIG. 8 is a schematic view showing a second state of a first cam portion 304 fitting with a second cam portion 305 provided according an embodiment of the present application. As shown in FIG. 7, the first transition portion 3046 of the first cam portion 304 is attached to the second transition portion 3057. At this time, the relative distance between the first cam portion 304 and the second cam portion 305 in the axial direction is the shortest. As shown in FIG. 8, since the second cam portion 305 is only displaceable in the axial direction rather than in the circumferential direction, the first convex portion 3041 may move along the surface of the second transition part 3057 when the first cam portion 304 rotates, thus pushing the second cam portion 305 and displacing the second cam portion 305 downward until the first convex portion 3041 abuts against the second convex portion 3055 of the second cam portion 305. At this time, the relative distance between the first cam portion 304 and the second cam portion 305 in the axial direction is the largest. With the continuous rotation of the first cam portion 304, the first convex portion 3041 will continue to move along the adjacent second transition portion 3057, so that one of the first transition portions 3046 will be attached to one of the second transition portions 3057 again, and the first cam portion 304 and the second cam portion 305 will be in the state of the shortest relative distance in the axial direction again.

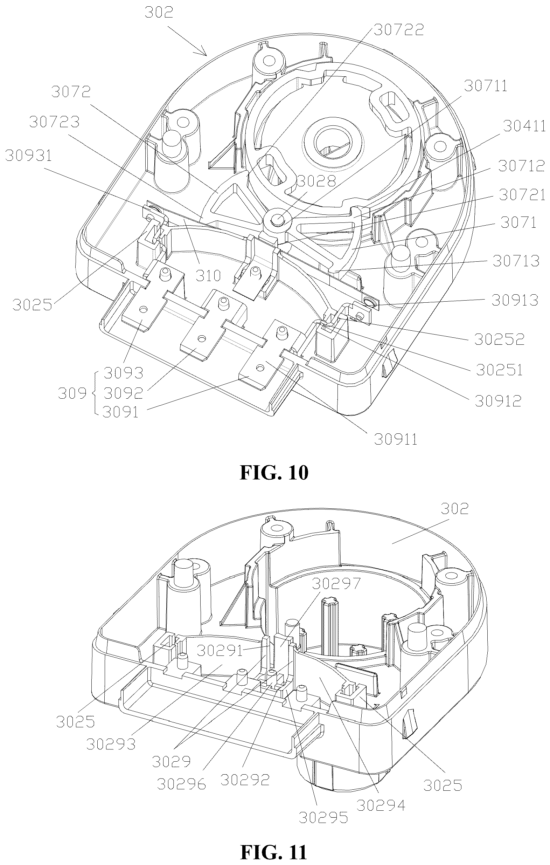

With reference to FIG. 9 and FIG. 10, FIG. 9 is a partial view showing a working state of a driving device provided according an embodiment of the present application, and FIG. 10 is a partial view showing another working state of a driving device provided according an embodiment of the present application. The lower housing 302 is provided with a positioning shaft portion 3028, which may be integrally formed with the lower housing 302 by injection molding. The swing arm assembly 307 includes a first swing arm portion 3071 and a second swing arm portion 3072. The first swing arm portion 3071 includes a first swing arm hole portion 30711 which is mounted outside the positioning shaft portion 3028 and is rotable relative to the positioning shaft portion 3028. The second swing arm portion 3072 includes a second swing arm hole portion 30721, which is sleeved on the positioning shaft portion 3028 and is rotable relative to the positioning shaft portion 3028. The second swing arm portion 3072 is closer to the bottom surface of the lower housing 302 than the first swing arm portion 3071. That is, based on the view shown in FIG. 9, the second swing arm portion 3072 is located below the first swing arm portion 3071. After the assembly, the first swing wall portion 3071 and the first engaging groove 30441 of the first cam portion 304 have approximately the same height, or they are approximately flush in the horizontal direction. The second swing arm portion 3072 and the second engaging groove 30442 have approximately the same height, or they are approximately flush in the horizontal direction. The first swing arm portion 3071 includes a first engaging portion 30712 and a first collision portion 30713, where the first engaging portion 30712 is arranged towards the first cam portion 304, and the first collision portion 30713 is arranged back to the first cam portion 304. The second swing arm portion 3072 includes a second engaging portion 30722 and a second collision portion 30723, where the second engaging portion 30722 is arranged towards the first cam portion 304, and the second collision portion 30723 is arranged back to the first cam portion 304. In this embodiment, the first swing arm portion 3071 is integrally processed and formed by injection molding, and the second swing arm portion 3072 is also integrally processed and formed by injection molding, which is beneficial to improve the strength of the first swing arm portion 3071 and the second swing arm portion 3072. The first engaging portion 30712 may abut against and engage with the first engaging groove 30441, so that the first engaging portion 30712 is closer to the first cam portion 304, while the first collision portion 30712 is away from an elastic sheet 310 described below. This state is shown in FIG. 10. The second engaging portion 30722 may abut against and engage with the second engaging groove 30442, and the second engaging portion 30722 is closer to the first cam portion 304, while the second collision portion 30713 is away from the elastic sheet 310 described below. When one of the first engaging portion and the second engaging portion engages with the corresponding engaging groove of the first cam portion 304, the other abuts against the outer edge of the body portion of the first cam portion, rather than being engaged with the corresponding engaging groove. In other words, the first engaging portion 30712 being engaged with the first engaging groove 30441 while the second engaging portion 30722 being engaged with the second engaging groove 30442 will not happen at the same time, and vice versa.

With reference to FIG. 11, FIG. 11 is a schematic structural view of a lower housing provided according an embodiment of the present application. The lower housing 302 is provided with an elastic sheet restraining portion 3029, which is provided with an elastic sheet supporting portion 30291 and an elastic sheet positioning portion 30292. The elastic sheet supporting portion 30291 is used to support the elastic sheet 310, and the elastic sheet positioning portion 30292 is used to position the elastic sheet 310, which is beneficial to ensuring better assembly accuracy and improve assembly consistency when the elastic sheet 310 is mounted to the lower housing 302. The elastic sheet supporting portion 30291 and the elastic sheet positioning portion 30292 can be arranged in various ways. In one embodiment, as shown in FIG. 11, the elastic sheet restraining portion 3029 is formed by extending from the bottom surface of the lower housing 302 to the upper side as shown in the figure. The elastic sheet restraining portion 3029 includes a first pressure bearing surface portion 30293 and a second pressure bearing surface portion 30294. The first pressure bearing surface portion 30293 and the second pressure bearing surface portion 30294 are generally arc-shaped and may abut against the elastic sheet 310, which is beneficial to supporting the elastic sheet 310. In addition, the first pressure bearing surface portion 30293 and the second pressure bearing surface portion 30294 may separate the elastic sheet 310 from the insert 309, so as to prevent the wire at one end of the insert 309 from contacting with the elastic sheet and transmitting current. The elastic sheet restraining portion 3029 further includes an elastic sheet seat 30295, which may be integrally formed with the elastic sheet restraining portion 3029 by injection molding. That is, the elastic sheet seat 30295 and the elastic sheet restraining portion 3029 are of an integrated injection molding structure. The elastic sheet positioning portion 30292 is located on the elastic sheet seat 30295 and may enable the fitting and positioning of the elastic sheet 310, which is beneficial to improving the assembly accuracy of the elastic sheet 310.

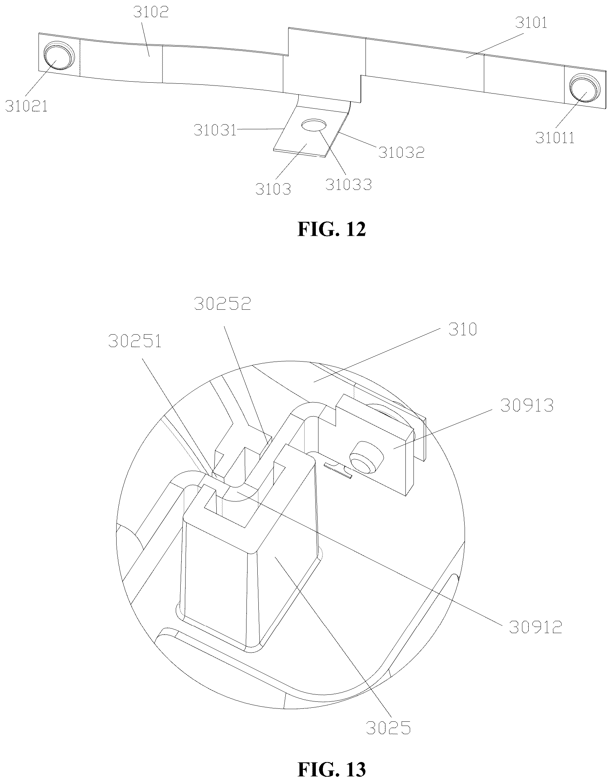

With reference to FIG. 12, FIG. 12 is a schematic structural view of an elastic sheet provided according an embodiment of the present application. The elastic sheet 310 includes a first elastic sheet arm 3101, a second elastic sheet arm 3102 and an elastic sheet fixing portion 3103. In this embodiment, the first elastic sheet arm 3101, the second elastic sheet arm 3102 and the elastic sheet fixing portion 3103 are integrally formed of metal materials, and the elastic sheet fixing portion 3103 is located at the middle of the elastic sheet 310, and the first elastic sheet arm 3101 and the second elastic sheet arm 3102 are located at both sides of the elastic sheet fixing portion 3103 respectively. The elastic sheet fixing portion 3103 is bent relative to the first elastic sheet arm 3101 and the second elastic sheet arm 3102, that is, the extending direction of the elastic sheet fixing portion 3103 has a certain angle with the extending direction of the first elastic sheet arm 3101 or the second elastic sheet arm 3102. In the axial direction, the first elastic sheet arm 3101 and the first swing arm portion 3071 have approximately the same height, and are configured such that when the first swing arm portion 3071 swings in a clockwise direction shown in FIG. 9, the first elastic sheet arm 3101 may be pushed to move in the clockwise direction, so as to abut against one of the insert described below. Similarly, the second elastic sheet arm 3102 and the second swing arm portion 3072 have approximately the same height, and are configured such that when the second swing arm portion 3072 swings in a counterclockwise direction shown in FIG. 9, the second elastic sheet arm 3102 may be pushed to move in the counterclockwise direction, so as to abut against another insert described below. The elastic sheet fixing portion 3103 includes a first elastic sheet limiting portion 31031 and a second elastic sheet limiting portion 31032. Correspondingly, the elastic sheet positioning portion 30292 of the lower housing 302 is in the shape of a groove, and the width of the groove matches the width of the elastic sheet fixing portion 3103, so that the first elastic sheet limiting portion 31031 and the second elastic sheet limiting portion 31032 are restricted by the elastic sheet positioning portion 30292 after the elastic sheet 310 is assembled in the lower housing 302, realizing positioning and allowing the elastic sheet 310 to have better positioning accuracy after being assembled. In order to fix the elastic sheet 310 to the lower housing 302, an elastic sheet hole portion 31033 may be further provided on the elastic sheet 310, and correspondingly, a columnar portion 30296 may be provided on the elastic sheet seat 30295. The elastic sheet 310 may be more precisely positioned by mounting the elastic sheet hole portion 31033 outside the columnar portion 30296 and secure them together. The columnar portion 30296 can adopt various structural forms. As a derivative embodiment, the columnar portion 30296 may be configured as an expansion pin structure. After the elastic sheet 310 is inserted, the expansion pin will expand, restricting the detachment of the elastic sheet 310 and thereby locking the elastic sheet 310 in place to prevent the elastic sheet 310 from coming off. This design offers higher reliability. Of course, the columnar portion 30296 may also be configured as other possible structures. For example, after the elastic sheet is assembled, an end of the columnar portion can be deformed to prevent the elastic sheet from falling off, or external threads can be provided on the end of the columnar portion, and nuts can be screwed onto the end of the columnar portion to prevent the elastic sheet from falling off, and so on, which will not be described here.

The elastic sheet supporting portion 30291 is located on the same side of the first pressure bearing surface portion 30293 and the second pressure bearing surface portion 30294, that is, on the side of the elastic sheet restraining portion 3029 facing the first cam portion 304. The elastic sheet supporting portion 30291 is provided with at least a part of plane portion, so that when the elastic deformation of the elastic sheet 310 occurs, the elastic sheet 310 can be supported, which is beneficial to reducing the deformation of the elastic sheet 310 at the bending part and improving the working stability of the elastic sheet 310. In order to further limit the elastic sheet 310, an elastic sheet abutting portion 30297 may be further provided. The elastic sheet abutting portion 30297 and the elastic sheet supporting portion 30291 are staggered from each other to form a slit-like groove between them, and the width of the groove matches or is slightly larger than the thickness of the elastic sheet 310. During assembling, the elastic sheet 310 can be inserted into the groove, which can further improve the mounting accuracy of the elastic sheet 310, and can limit the elastic 310 to move toward the direction of the swing arm. In other words, the elastic sheet restraining portion 3029 and the elastic sheet abutting portion 30297 jointly position the middle part of the elastic sheet, which is beneficial to the position accuracy of the first swing arm portion and the second swing arm portion of the elastic sheet.

An end of the first elastic sheet arm 3101 is provided with a first elastic sheet contact 31011, which is arranged in the opposite direction to the swing arm assembly. An end of the second elastic sheet arm 3202 is provided with a second elastic sheet contact 31021, which is also arranged in the opposite direction to the swing arm assembly.

The lower housing 302 is provided with an insert positioning portion 3025 for fixing the insert. The insert positioning portion 3025 may be integrally formed with the lower housing 302 by injection molding. In this embodiment, two insert positioning portions 3025 are provided, and they are integrated with the elastic sheet restraining portion 3029, which can enhance the strength of the elastic sheet restraining portion 3029 and the insert positioning portions 3025. Of course, the insert positioning portion 3025 may be integrally formed with the lower housing 302 by injection molding, while it may be separated from the elastic sheet restraining portion 3029. These equivalent transformation forms can realize the positioning of the insert, and this embodiment does not limit this. Taking one of the insert positioning portions as an example, the insert positioning portion 3025 is provided with a first insert clamping portion 30251 and a second insert clamping portion 30252, and the extending directions of the first insert clamping portion 30251 and the second insert clamping portion 30252 have a certain included angle. The insert positioning portion at least includes two plate-shaped parts with a certain angle. In the embodiment shown in FIG. 11, as a concrete structure, the two plate-shaped parts are generally vertical, where one plate-shaped part is provided with a groove as the first insert clamping portion 30251, and the other plate-shaped part is provided with a groove as the second insert clamping portion 30252. With reference to FIG. 13, FIG. 13 is an enlarged view of part I of FIG. 9.

The insert 309 includes a first insert 3091, a second insert 3092, and a third insert 3093, and the second insert 3092 can be used as a common terminal and electrically connected to one terminal of the motor, while the elastic sheet 310 is electrically connected to the other terminal of the motor through the elastic sheet fixing portion 3103. The above-mentioned electrical connection can be achieved by wire connection and other common connection methods in the field, and is not limited here. In this way, the first insert 3091, the elastic sheet 310 and the second insert 3092 may become a part of a circuit. The second insert 3092, the elastic sheet 310 and the third insert 3093 may be a part of another circuit. The insert 309 is connected to a controller (not shown in the figure), so that the first insert 3091 and the second insert 3092 are powered on at the same time, or the second insert 3092 and the third insert 3093 are powered on at the same time.

Taking the first insert 3091 as an example, the first insert 3091 includes an insert connecting end 30911 and an insert fixing end 30912, where the insert fixing end 30912 has at least one bending portion. In a specific embodiment, the insert fixing end 30912 has two bending portions, so that the insert fixing end 30912 is inserted into the first insert clamping portion 30251 and the second insert clamping portion 30252 at the same time. In this way, the insert positioning portion 3025 can provide at least two directions of limit for the first insert, which is beneficial to realize effective limit for the first insert 3091. The end of the insert fixing end 30912 is provided with a first insert contact 30913, which is used for abutting against the above-mentioned first elastic sheet contact 31011, so that the circuit can be closed when it is in the energized state. The third insert 3093 may have the same structure as the first insert 3091, and has a second insert contact 30931, and is fixed with another insert positioning portion 3025, which is not repeated here.

When in the working state as shown in FIG. 9, the first collision portion 30713 pushes the first elastic sheet arm 3101 of the elastic sheet 310 clockwise, so that the first elastic sheet contact 31011 abuts against the first insert contact 30913. At this time, the first insert 3091 and the second insert 3092 are energized, and the current forms a loop among the second insert 3092, the motor 303, the elastic sheet 310 and the first insert 3091. The motor 303 rotates and drives the first cam portion 304 to rotate. When it rotates to a certain angle, the second engaging portion 30722 comes out of the second engaging groove 30442 and engages with the outer edge of the first body portion 3044. The second swing arm portion 3072 is swung counterclockwise as shown in the figure, and the second elastic sheet contact 31021 of the second elastic sheet arm 3102 is pushed into contact with the second insert contact 30931 of the third insert 3093. The first cam portion 304 continues to rotate. When the first engaging portion 30712 abuts against the first engaging groove 30441 under the elastic force of the elastic sheet 310, the first swing arm portion 3071 swings counterclockwise as shown in the figure, so that the first elastic sheet contact 31011 of the first elastic sheet arm 3101 is separated from the first elastic sheet contact 30911. At this time, the motor is powered off and stops running, forming the working state shown in FIG. 10.

On the contrary, when in the working state shown in FIG. 10, the second insert 3092 and the third insert 3093 are energized, and the current forms a loop among the second insert 3092, the motor 303, the elastic sheet 310 and the third insert 3093. The motor 303 rotates and drives the first cam portion 304 to rotate. When the motor 303 rotates to a certain angle, the second engaging portion 30722 is engaged with the second engaging groove 20442 under the elastic force of the elastic sheet 310. The second swing arm 3072 swings clockwise as shown in the figure, so that the second elastic sheet contact 31021 of the second elastic sheet arm 3102 is separated from the second insert contact 30931. At this time, the motor is powered off and stops running, resulting in the working state shown in FIG. 9.

It should be noted that the orientation terms such as up, down, left, right mentioned in the embodiment are all introduced for sake of description based on the drawings in the description; and the ordinal terms such as "first" and "second" in the component name are also introduced for sake of description, and do not mean to make any restriction on any order of the components. In addition, the technical features in the above embodiments can be partially replaced or combined in various ways to form a new embodiment. The description of the above embodiments is only used to help understand the method of the present application and its core idea, and does not limit the present application in any form.

## Claims

1. A driving device, comprising a lower housing (302) and an elastic sheet (310), wherein the lower housing (302) is provided with an elastic sheet restraining portion (3029), and the elastic sheet restraining portion (3029) is provided with an elastic sheet supporting portion (30291) and an elastic sheet positioning portion (30292);
the elastic sheet (310) comprises an elastic sheet fixing portion (3103), which is fixedly connected to the elastic sheet positioning portion (30292), the elastic sheet supporting portion (30291) is provided with at least partial plane portion, and the elastic sheet (310) is allowed to abut against the elastic sheet supporting portion (30291).

2. The driving device according to claim 1, wherein the elastic sheet restraining portion (3029) comprises an elastic sheet seat (30295), the elastic sheet positioning portion (30292) is located in the elastic sheet seat (30295), and the elastic sheet seat (30295) and the elastic sheet restraining portion (3029) are of an integrated injection molding structure.

3. The driving device according to claim 2, wherein the elastic sheet fixing portion (3103) comprises a first elastic sheet limiting portion (31031) and a second elastic sheet limiting portion (31032), a width of the elastic sheet positioning portion (30292) matches with a width of the elastic sheet fixing portion (3103), and the first elastic sheet limiting portion (31031) and the second elastic sheet limiting portion (31032) are restrained by the elastic sheet positioning portion (30292) to realize positioning.

4. The driving device according to claim 2, wherein the elastic sheet seat (30295) is provided with a column portion (30296), and the elastic sheet fixing portion (3103) comprises an elastic sheet hole portion (31033), which is mounted outside the column portion (30296) and is fixedly connected to the column portion (30296).

5. The driving device according to claim 4, wherein the column portion (30296) is an expansion pin structure, and the column portion (309296) is configured to limit the detachment of the elastic sheet (310) after the column portion (30296) is inserted into the elastic sheet hole portion (31033).

6. The driving device according to claim 1, wherein the elastic sheet restraining portion (3029) and the lower housing (302) are of an integrated injection molding structure, the elastic sheet restraining portion (3029) extends upward from a bottom surface of the lower housing (302), and the elastic sheet restraining portion (3029) comprises a first pressure bearing surface portion (30293) and a second pressure bearing surface portion (30294), which are configured to separate the elastic sheet (310) from the insert (309).

7. The driving device according to claim 6, wherein the supporting portion (30291) is located at a same side of the first pressure bearing surface portion (30293) and the second pressure bearing surface portion (30294) of the elastic sheet restraining portion (3029).

8. The driving device according to claim 6, further comprising an elastic sheet abutting portion (30297), wherein the elastic sheet abutting portion (30297) and the elastic sheet supporting portion (30291) are arranged to be staggered from each other, a slit-like groove is formed between the elastic sheet abutting portion (30297) and the elastic sheet restraining portion (3029), a width of the groove matches with a width of the elastic sheet (310), and the elastic sheet abutting portion (30297) is allowed to abut against the elastic sheet (310).

9. The driving device according to claim 1, wherein the elastic sheet (310) further comprises a first elastic sheet arm (3101) and a second elastic sheet arm (3102), wherein the elastic sheet (310) is integrally formed by metal materials, the first elastic sheet arm (3101) and the second elastic sheet arm (3102) are located at both sides of the elastic sheet fixing portion (3103), and an extending direction of the elastic sheet fixing portion (3103) has an included angle with extending directions of the first elastic sheet arm (3101) and the second elastic sheet arm (3102).

10. The driving device according to claim 6, wherein the elastic sheet (310) further comprises a first elastic sheet arm (3101) and a second elastic sheet arm (3102), the elastic sheet (310) is integrally formed by metal materials, the first elastic sheet arm (3101) and the second elastic sheet arm (3102) are located at both sides of the elastic sheet fixing portion (3103), the first elastic sheet arm (3101) is allowed to abut against the first pressure bearing surface portion (30293), and the second elastic sheet arm (3102) is allowed to abut against the second pressure bearing surface portion (30294).

11. A water valve, comprising a valve body (10), a connecting seat (20), a driving device (30) and a core assembly (40), wherein the driving device (30) adopts the driving device according to any one of claims 1 to 7.
